# EUROPÄISCHE PATENTSCHRIFT

(11) **EP 2 613 427 B1**
(45) Veröffentlichungstag und Bekanntmachung des Hinweises auf die Patenterteilung: **25.04.2018**
(21) Anmeldenummer: 13001532.4
(22) Anmeldetag: 20.01.2011
(51) Int. Cl.: H02K 11/00, H02K 5/14, H02K 11/25, H02K 11/27, H02H 3/00, H01R 39/59, H02H 7/085

(54) **Elektromotor zum Antrieb einer Kraftfahrzeugkomponente**
ELECTRIC MOTOR FOR DRIVING A MOTOR VEHICLE COMPONENT
MOTEUR ÉLECTRIQUE POUR L'ENTRAÎNEMENT D'UN COMPOSANT DE VÉHICULE AUTOMOBILE

(30) Priorität: 23.02.2010 DE 202010002664 U
(43) Veröffentlichungstag der Anmeldung: 10.07.2013
(62) Teilanmeldung aus: 11703582.4
(73) Patentinhaber: Brose Fahrzeugteile GmbH & Co. Kommanditgesellschaft, Würzburg, 97076 Würzburg (DE)
(72) Erfinder: Muhl, Ralf, 12207 Berlin (DE); Noack, Ulrich, 10405 Berlin (DE)
(74) Vertreter: FDST Patentanwälte

(56) Entgegenhaltungen:
- WO-A1-2008/025342
- WO-A2-2005/077017
- DE-U1-202008 000 975
- US-A1- 2002 093 259

## Beschreibung

Die Erfindung betrifft einen Elektromotor zum Antrieb einer Kraftfahrzeugkomponente gemäß dem Oberbegriff des Anspruchs 1. Ein derartiger Elektromotor ist beispielsweise aus der WO 2005/077017 bekannt. Unter Elektromotor wird hierbei insbesondere ein Gleichstrommotor, vorzugsweise ein Lüftermotor zur Kühlwasserkühlung eines Kraftfahrzeugs verstanden.

Aus der DE 10 2007 011 548 A1 ist ein elektromotorisch betriebenes Verstellsystem eines Kraftfahrzeugs, wie beispielsweise ein Fensterheber, eine Sitzverstellung oder ein Tür- oder Schiebedachantrieb, mit einer Ansteuerelektronik zur Steuerung des Elektromotors unter Berücksichtigung eines Einklemmschutzes bekannt. Zusätzlich zu einem Software-Thermoschutz ist ein thermisches Sicherungselement in Form eines Federelementes als Überlastschutz in einen zum Elektromotor führenden Leiterbahnabschnitt zwischen zwei Lotpunkten gehalten. Bei einem über eine bestimmte Zeit fließenden Überlaststrom wird das Lot an einem der Lotpunkte aufgeschmolzen, so dass in Folge der Federvorspannung des Federelementes die Leiterbahn spontan unterbrochen wird. Diese Thermosicherung kann als ein vorgespanntes spiralfederartiges Federelement, als Blattfeder oder als Querschnittsverengung nach Art einer Dehndrahtsicherung ausgeführt sein.

Aus der DE 10 2007 025 345 B4 ist es bekannt, in einem Gleichstrom-Lüftermotor eines Kraftfahrzeuges ein Thermoschutzelement in Form eines TCO-Elementes (thermal cut-off-element), einer Schmelzsicherung oder eines Bimetallschalters in Verbindung mit einem kunststoffumspritzten Stanzgitter einzusetzen, das zwischen einem Gleichspannungsversorgungsanschluss und einer Steuerelektronik angeordnet und an diese thermisch gekoppelt ist. Übersteigt die Temperatur der Steuerelektronik einen vorgegebenen Schwellwert, so löst das Thermoschutzelement aus und unterbricht die elektrische Verbindung zwischen dem Gleichspannungsversorgungsanschluss und der Steuerelektronik.

Die bekannten Thermoschutzelemente sind einerseits für elektronisch gesteuerte Elektromotoren und andererseits für eine nur geringe Stromtragfähigkeit sowie einen relativ kleinen Temperaturarbeitsbereich bis ca. 80°C konzipiert.

Aus der DE 20 2008 000 975 U1 oder der WO2005077017 ist ein Bürstenhalter für eine elektrische Maschine mit einer Kontaktfeder mit zwei Federarmen bekannt, deren Federfreienden über eine Lotverbindung unter Federvorspannung mit Stanzgitterelementen kontaktiert sind.

Der Erfindung liegt die Aufgabe zugrunde, einen Elektromotor, insbesondere einen Gleichstrom-Lüftermotor für ein Kraftfahrzeug, mit einem Thermoschutz anzugeben, der den Einsatz auch bei einer Temperatur beispielsweise bis zu 120°C sowie Stromstärken oberhalb von 20A ermöglicht.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Dazu weist der Elektromotor, der insbesondere elektroniklos und in nur einer Drehrichtung betrieben ist, ein kunststoffumspritztes Stanzgitter zur Bildung einer in eine elektrische Isolierung eingeprägten Strombahn auf, die mit mindestens einer Bürste verbunden ist, welche an einem rotorseitigen Kommutator des Elektromotors kontaktierend anliegt. Die den Motorstrom führende Strombahn ist unter Bildung von zwei zueinander beabstandeten Strombahnenden unterbrochen, wobei die dadurch hergestellte Unterbrechungsstelle mit einer Kontaktfeder als Thermosicherung gebrückt ist.

Im Bereich der Unterbrechungsstelle der in die elektrische Isolierung eingeprägten Strombahn ist eine fensterartige Öffnung vorgesehen, durch welche bei einer Kontaktöffnung der Kontaktfeder dessen vorgespannter Federarm ausfedem bzw. ausschwenken kann. Im Fensterbereich der Unterbrechungsstelle kann eine Anlagestelle gebildet sein, an der das entsprechende Federfreienden bei einer Kontaktöffnung der Kontaktfeder definiert anschlägt.

Die Kontaktfeder weist zwei Federarme mit jeweils einem Fixierende und einem Federfreiende auf. Während die Fixierenden der Federarme mit jeweils einem Strombahnende der den motorstromführenden Strombahn elektrisch leitend verbunden sind, sind die Federfreienden der Kontaktfeder über eine Lotverbindung unter Federvorspannung miteinander kontaktiert. Diese Doppelfeder ist aufgrund der geringen Toleranzen der Lotverbindung optimal definierbar und an unterschiedliche Stromstärken besonders einfach adaptierbar.

Die zweiteilig ausgeführte Kontaktfeder (Doppelfedervariante) ist vorzugsweise lediglich an einem der Federarme abgekröpft und bildet somit mindestens eine, vorzugsweise zwei zueinander beabstandete Biegestellen aus. Deren Biegemulden sind dem anderen Federarm abgewandt, so dass bei Herstellung der Lotverbindung der gebogene oder abgekröpfte Federarm zwischen den Biegestellen ausgewölbt ist und dadurch die Federvorspannung der Kontaktfeder erzeugt. Hierbei ist das Federfreiende des anderen Federarms vorzugsweise muldenartig geformt, um das Lot zur Herstellung der Lotverbindung mit dem Federfreiende des unter Erzeugung der Federvorspannung gebogenen Federarms aufzunehmen.

Die Halterung der Kontaktfeder an den Strombahnenden erfolgt geeigneterweise über kontaktierende Schnapp- oder Rastverbindungen. Dazu weisen die Fixierenden der Kontaktfeder zueinander beabstandete sowie federelastische und zweifach abgekröpfte Fixierlaschen auf, die an Öffnungsrändem korrespondierender Öffnungen des jeweiligen Strombahnendes zweckmäßigerweise form- und/oder kraftschlüssig geklemmt sind.

Die Kontaktfeder besteht insbesondere aus Kupferberyllium, d. h. einer Kupferbronze (CuBe oder CuCoBe) mit Beryllium als Legierungsbestandteil. Die aus Kupferberyllium bestehende Kontaktfeder ist geeigneterweise mit einer galvanischen Sperrschicht, vorzugsweise mit Nickel, beschichtet. Die derart beschichtete und aus Kupferberyllium bestehende Kontaktfeder ist geeigneterweise zusätzlich verzinnt.

Die mit der Erfindung erzielten Vorteile bestehen insbesondere darin, dass durch den Einsatz einer Thermosicherung in Form einer aus zwei miteinander kontaktierten Federarmen bestehenden Kontaktfeder, die eine Unterbrechungsstelle in einer den Motorstrom eines Elektromotors führenden Strombahn überbrückt, einerseits ein zuverlässiger Schutz gegen Überströme und/oder Übertemperaturen bereitgestellt ist. Andererseits ist eine Fehlauslösung bei zulässigen Übertemperaturen bzw. Überströmen sicher vermieden.

Eine derartige Kontaktfeder als Thermoschutz eignet sich daher besonders für den Einsatz in einem Gleichstrom-Elektromotor ohne Steuerelektronik sowie mit nur einer Antriebsrichtung (Drehrichtung) und somit insbesondere für einen Kühlerlüftermotor eines Kraftfahrzeugs. Gerade ein solcher Lüftermotor kann für eine erhöhte Brandgefahr ursächlich sein, zumal dieser für eine erforderliche Kühlwasserkühlung auch dann noch in Betrieb sein kann, wenn das Fahrzeug vom Benutzer bereits abgestellt und verlassen worden ist.

Nachfolgende wird ein Ausführungsbeispiel der Erfindung anhand einer Zeichnung näher erläutert. Darin zeigen:
- Fig. 1: ausschnittsweise in einer Teilansicht einen Rotor eines Elektromotors und eine Bürstenanordnung in einem Strompfad mit einer Kontaktfeder als Thermosicherung,
- Fig. 2: die Bürstenanordnung mit Kontaktfeder ohne Rotor in einer perspektivischen Darstellung,
- Fig. 3: in perspektivischer Darstellung einen die Kontaktfeder in einer Unterbrechungsstelle der Strombahn zeigenden Ausschnitt aus den Fig. 1 und 2 in größerem Maßstab und in einer Unteransicht,
- Fig. 4: in einer Darstellung gemäß Fig. 3 die Kontaktfeder in ausgelöstem Zustand in einer Draufsicht gemäß Fig. 2,
- Fig. 5: einen Schnitt entlang der Linie V-V in Fig. 3 mit unter Federvorspannung miteinander kontaktierten Federarmen der Kontaktfeder, und

- Fig. 6: in einer gegenüber Fig. 5 um 180° gedrehten Schnittdarstellung entlang der Linien VI-VI in Fig. 5 die Kontaktfeder in ausgelöstem Zustand.

Einander entsprechende Teile sind in allen Figuren mit den gleichen Bezugszeichen versehen.

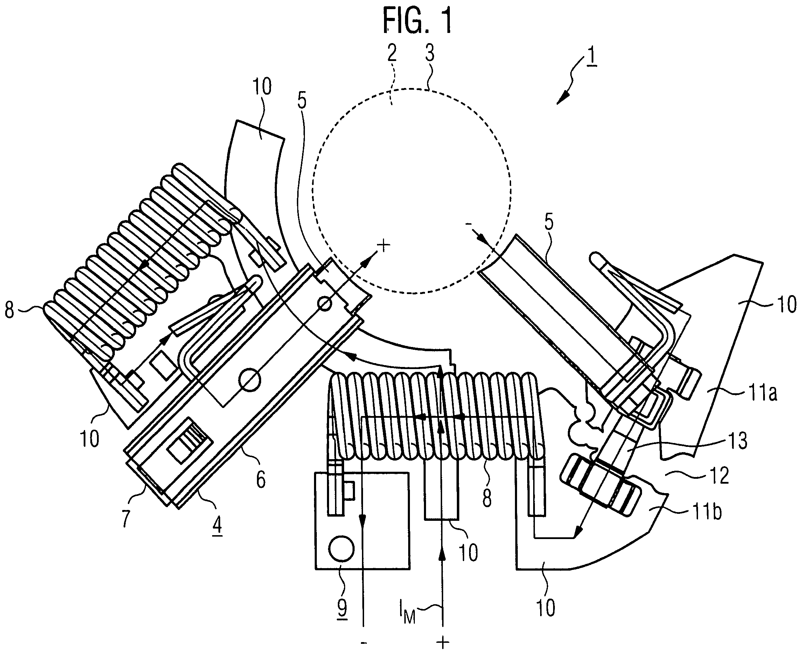

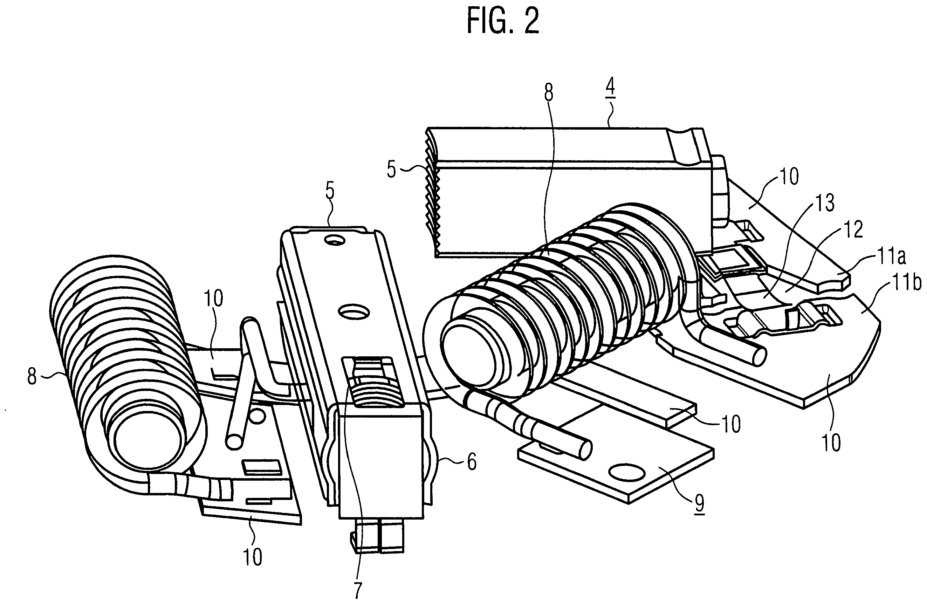

Fig. 1 zeigt unter Weglassen eines Motorgehäuses und eines Stators einen Elektromotor 1 mit einem Rotor 2 mit darauf rotorfest angeordneten, strichliniert angedeuteten Lamellen (Kommutatorlamellen) eines Kommutators 3 und einer Bürstenanordnung 4 mit zwei am Umfang des Rotors 2 zueinander versetzt angeordneten Bürsten 5. Wie an lediglich einer der Bürsten 5 dargestellt, befinden sich diese in einem Bürstenköcher 6 zusammen mit einem Federelement 7, welches die jeweilige Bürste 5 unter entsprechender Federvorspannung gegen den Kommutator 3 drückt, so dass die jeweilige Bürste 5 am Kommutator 3 bzw. an dessen Kommutatorlamellen kontaktierend anliegt. Die entsprechende Bürstenanordnung 4 ist ohne Rotor 2 in Fig. 2 perspektivisch dargestellt.

Die Bürsten 5 sind jeweils über eine Spule 8 in einen mit Pluszeichen (+) und Minuszeichen (-) sowie durch die Pfeildarstellung gekennzeichneten Strompfad 9 geschaltet, der über den Kommutator 3 und die (nicht dargestellten) Spulenwicklungen des Rotors 2 sowie in nicht näher dargestellter Art und Weise über die Fahrzeugbatterie eines Kraftfahrzeugs bzw. dessen Bordnetz geschlossen ist. Die übrigen Teile der Strombahn 9, mit denen die Spulen 8 sowie die Bürsten 5 verbunden sind, sind von einem kunststoffumspritzten Stanzgitter 10 gebildet. Die den Motorstrom I_{M} führende Strombahn 9 ist unter Bildung von zwei zueinander beabstandeten Strombahnenden 11a, 11b unter Bildung einer Unterbrechungsstelle 12 unterbrochen. Die Unterbrechungsstelle 12 ist mittels einer Kontaktfeder 13 als Thermosicherung überbrückt.

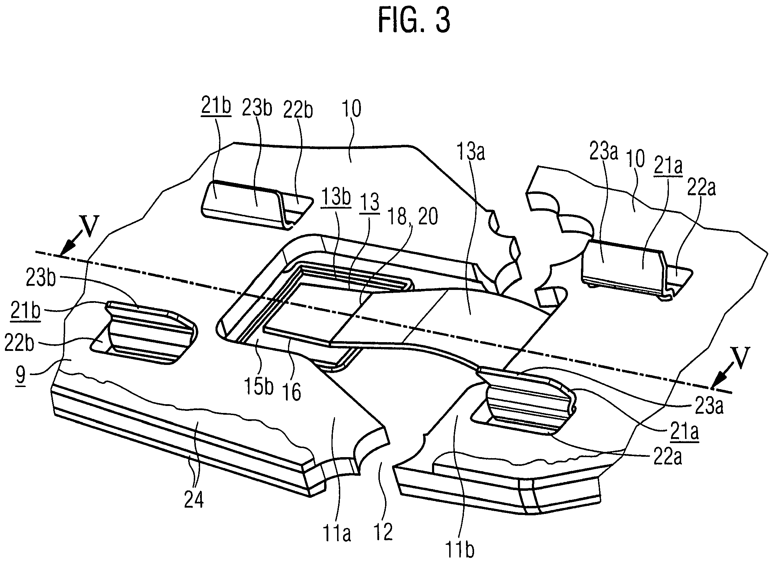

Wie aus den Fig. 3 bis 6 vergleichsweise deutlich ersichtlich ist, besteht die Kontaktfeder 13 aus zwei Federarmen 13a und 13b mit jeweils einem Fixierende 14a bzw. 14b und einem Federfreiende 15a bzw. 15b. Die Fixierenden 14a, 14b der beiden Federarme 13,13b der Kontaktfeder 13 sind jeweils mit einem der beiden Strombahnenden 11a bzw. 11b verbunden. Die beiden Federfreienden 15a, 15b der jeweiligen Federarme 13a, 13b sind über eine Lotverbindung 16 unter Federvorspannung miteinander elektrisch leitend verbunden.

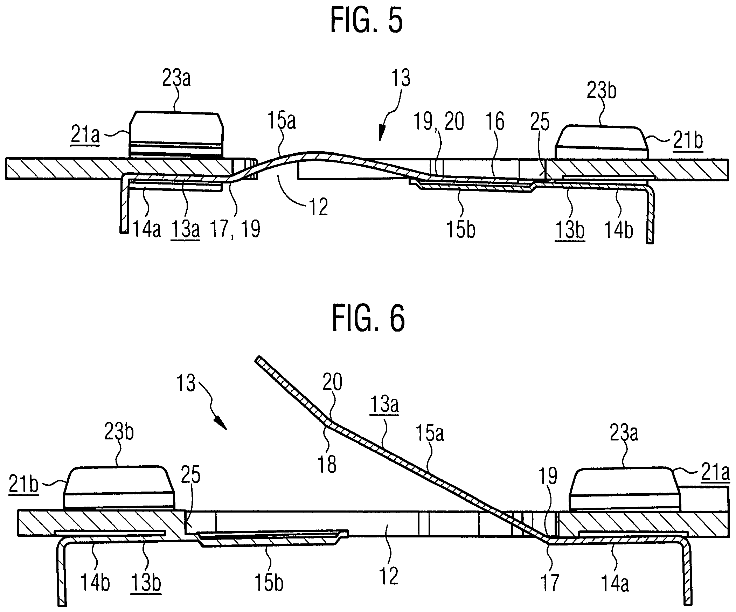

Zur Herstellung der Federvorspannung ist im Ausführungsbeispiel nur einer der beiden Federarme - hier der Federarm 13a der Kontaktfeder 13 - unter Bildung einer ersten, dem zugehörigen Fixierende 14a nahegelegenen Biegestelle 17 und einer entlang des Federfreiendes 13a beabstandeten zweiten Biegestelle 18, vorzugsweise unter einem Winkel kleiner 180° und größer 90° abgekröpft. Die dadurch gebildeten Biegemulden 19 bzw. 20 sind dem anderen Federarm 13b abgewandt, wie insbesondere aus Fig. 6 ersichtlich ist.

Wie in Fig. 5 vergleichsweise deutlich erkennbar ist, ist in der kontaktierenden Lotverbindung 16 der beiden Federarme 13a, 13b der Federarm 13a im Bereich der Unterbrechungsstelle 12 - je nach Blickrichtung - aus- bzw. eingewölbt, so dass die Federfreienden 15a, 15b der Kontaktfeder 13 unter Federvorspannung miteinander kontaktiert sind. Hierbei ist das Federfreiende 15b des im Ausführungsbeispiel zur Herstellung der Federvorspannung nicht abgekröpften Federarms 13b muldenartig geformt, um das Lot zur Herstellung der Lotverbindung 16 mit dem Federfreiende 115a des unter Erzeugung der Federvorspannung gebogenen Federarms 13a definiert aufzunehmen.

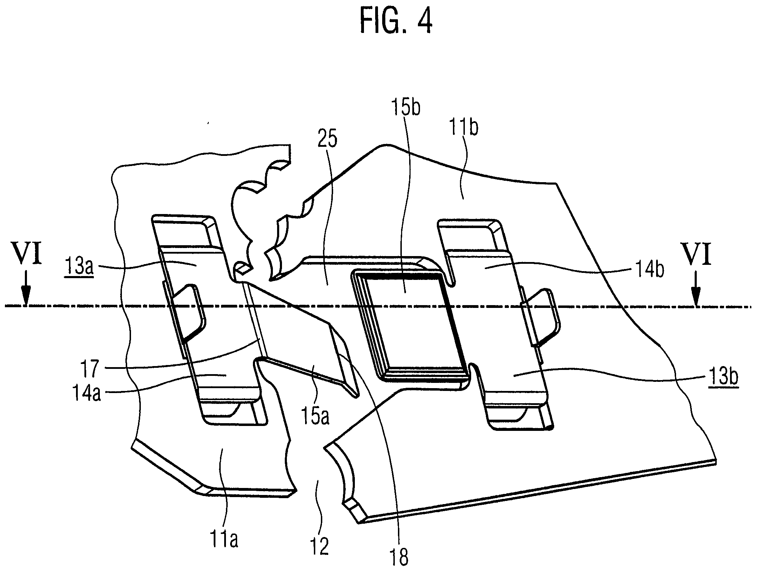

Wie aus den Fig. 3 und 4 vergleichsweise deutlich ersichtlich ist, sind die mit den Strombahnenden 11a, 11b verbundenen Fixierenden 14a bzw. 14b der Federarme 13a, 13b der Kontaktfeder 13 jeweils mit zwei zueinander beabstandeten Fixierlaschen 21a, 21b versehen. Diese durchsetzen korrespondierende Öffnungen 22a, 22b in den jeweiligen Strombahnenden 11a bzw. 11b des unterbrochenen Stanzgitters 10 und sind dort nach Art einer Schnapp- oder Rastverbindung gehalten. Hierzu sind die Fixierlaschen 21a, 21b zweifach abgekröpft und jeweils mit einer abgewinkelten und Einsteckzunge 23a bzw. 23b als Einführhilfe versehen. Die federelastischen Fixierenden 14a, 14b sind somit an den Öffnungsrändem der Öffnungen 22a, 22b des jeweiligen Strombahnendes 11a bzw. 11b mit den Strombahnenden 11a, 11b kontaktierend sowie zweckmäßigerweise form- und/oder kraftschlüssig geklemmt.

Wie in Fig. 3 angedeutet, ist das Stanzgitter 10 zur Bildung der in eine elektrische Isolierung eingeprägten Strombahn 9 mit einer Kunststoffschicht als elektrische Isolierung 24 umspritzt. Im Bereich der Unterbrechungsstelle 12 der in die elektrische Isolierung 24 eingeprägten Strombahn 9 ist eine Fensteröffnung 25 vorgesehen, aus welcher das vorgespannte Federfreiende 15a bei der in den Fig. 4 und 6 dargestellten Kontaktöffnung der Kontaktfeder 13 ausfedern kann.

Die Kontaktfeder 13 besteht vorzugsweise aus Kupferberyllium. Die Kontaktfeder 13 ist zudem mit einer galvanischen Sperrschicht, insbesondere mit Nickel, beschichtet und anschließend verzinnt. Die Verwendung von Kupferberyllium als Federmaterial der Kontaktfeder 13 sowie der zusätzlichen Beschichtung ermöglicht eine hohe Stromtragfähigkeit und Temperaturfestigkeit.

Eine derartige Kontaktfeder 13 als Thermoschutz eignet sich besonders für den Einsatz in einem Gleichstrom-Elektromotor ohne Steuerelektronik sowie mit nur einer Antriebsrichtung (Drehrichtung) und somit insbesondere für einen Kühlerlüftermotor eines Kraftfahrzeugs.

### Bezugszeichenliste

- 1: Elektromotor
- 2: Rotor
- 3: Kommutator
- 4: Bürstenanordnung
- 5: Bürste
- 6: Bürstenköcher
- 7: Federelement
- 8: Spule
- 9: Strombahn
- 10: Stanzgitter
- 11a,b: Strombahnende
- 12: Unterbrechungsstelle
- 13: Kontaktfeder
- 13a,b: Federarm
- 14a,b: Fixierende
- 15a,b: Federfreiende
- 16: Lotverbindung
- 17,18: Biegestelle
- 19,20: Biegemulde
- 21a,b: Fixierlasche
- 22a,b: Öffnung
- 23a,b: Einsteckzunge
- 24: Kunststoffschicht/Isolierung
- 25: Fensteröffnung
- I_{M}: Motorstrom

## Patentansprüche

1. Elektromotor (1) zum Antrieb einer Kraftfahrzeugkomponente, mit einem Rotor (2) mit einem Kommutator (3), an dem eine Bürste (5) kontaktierend anliegt, und mit einem kunststoffumspritzten Stanzgitter (10) zur Bildung einer in eine elektrische Isolierung (24) eingeprägten Strombahn (9), die mit der Bürste (5) verbunden ist, wobei die den Motorstrom (I_{M}) führende Strombahn (9) unter Bildung von zwei zueinander beabstandeten Strombahnenden (11a, 11b) unterbrochen und die Unterbrechungsstelle (12) mit einer Kontaktfeder (13) als Thermosicherung gebrückt ist,
**dadurch gekennzeichnet,**
- **dass** die Kontaktfeder (13) aus zwei Federarmen (13a, 13b) mit jeweils einem Fixierende (14a, 14b) und einem Federfreiende (15a, 15b) besteht, wobei die Fixierenden (14a, 14b) der Federarme (13a, 13b) mit jeweils einem Strombahnende (11a, 11b) verbunden und die Federfreienden (15a,15b) über eine Lotverbindung (16) unter Federvorspannung miteinander kontaktiert sind, und
- **dass** im Bereich der Unterbrechungsstelle (12) der in die elektrische Isolierung (24) eingeprägten Strombahn (9) eine Fensteröffnung (25) vorgesehen ist, aus welcher das vorgespannte Federfreiende (15a, 15b) bei einer Kontaktöffnung der Kontaktfeder (13) ausfedert.

2. Elektromotor (1) nach Anspruch 1,
**dadurch gekennzeichnet,**
**dass** einer der beiden Federarme (13a, 13b) der Kontaktfeder (13) mindestens eine Biegestelle (17,18) ausweist, deren Biegemulde (19, 20) dem anderen Federarm (13a, 13b) abgewandt ist.

3. Elektromotor (1) nach Anspruch 1 oder 2,
**dadurch gekennzeichnet,**
**dass** der Federarm (13a) zwei zueinander beabstandete Biegestellen (17, 18) aufweist, deren Biegemulde (19, 20) dem anderen Federarm (13b) abgewandt sind.

4. Elektromotor (1) nach Anspruch 2 oder 3,
**dadurch gekennzeichnet,**
**dass** das Federfreiende (15b) des anderen Federarms (13b) zur Herstellung der Lotverbindung (16) mit dem Federfreiende (15a) des unter Federvorspannung gebogenen Federarms (13a) muldenartig geformt ist.

5. Elektromotor (1) nach einem der Ansprüche 1 bis 4,
**dadurch gekennzeichnet,**
**dass** die Fixierenden (14a, 14b) der Kontaktfeder (13) zueinander beabstandete Fixierlaschen (21a, 21b) aufweisen, die unter Herstellung einer Schnappverbindung in korrespondierende Öffnungen (22a, 22b) des jeweiligen Strombahnendes (11a, 11b) geführt sind.

6. Elektromotor (1) nach einem der Ansprüche1 bis 5,
**dadurch gekennzeichnet,**
**dass** die Kontaktfeder (13) aus Kupferberyllium besteht.

7. Elektromotor (1) nach einem der Ansprüche1 bis 6,
**dadurch gekennzeichnet,**
**dass** die Kontaktfeder (13) mit einer galvanischen Sperrschicht versehen ist.

8. Elektromotor (1) nach einem der Ansprüche1 bis 7,
**dadurch gekennzeichnet,**
**dass** die Kontaktfeder (13) mit Nickel beschichtet ist.

9. Elektromotor (1) nach Anspruch 7 oder 8,
**dadurch gekennzeichnet,**
**dass** die galvanisch beschichtete Kontaktfeder (13) verzinnt ist.

## Claims

1. Electric motor (1) for driving a motor vehicle component, having a rotor (2) having a commutator (3) against which a brush (5) bears in a contact-making manner, and having a plastic injection-moulded leadframe (10) for forming a current path (9) which is embossed into an electrical insulation (24), said current path being connected to the brush (5), wherein the current path (9) which guides the motor current (I_{M}) is interrupted to form two current path ends (11a, 11b) which are spaced apart from one another and the interruption point (12) is bridged by a contact spring (13) as a thermal release,
**characterised in that**
- the contact spring (13) consists of two spring arms (13a, 13b), each having a fixing end (14a, 14b) and a spring free end (15a, 15b), wherein the fixing ends (14a, 14b) of the spring arms (13a, 13b) are each connected to a current path end (11a, 11b) and the spring free ends (15a, 15b) are in contact with one another via a solder connection (16) under spring preload, and
- in the region of the interruption point (12) of the current path (9) which is embossed into the electrical isolation (24), a window opening (25) is provided, out of which the preloaded spring free end (15a, 15b) springs during a contact opening of the contact spring (13).

2. Electric motor (1) according to claim 1,
**characterised in that**
one of the two spring arms (13a, 13b) of the contact spring (13) has at least one bending point (17, 18), whose bending depression (19, 20) faces away from the other spring arm (13a, 13b).

3. Electric motor (1) according to claim 1 or 2,
**characterised in that**
the spring arm (13a) has two bending points (17, 18) spaced apart from each other, whose bending depressions (19, 20) face away from the other spring arm (13b).

4. Electric motor (1) according to claim 2 or 3,
**characterised in that**
the spring free end (15b) of the other spring arm (13b) is shaped in the manner of a depression for producing the solder connection (16) to the spring free end (15a) of the spring arm (13a) that is bent under spring preload.

5. Electric motor (1) according to one of claims 1 to 4,
**characterised in that**
the fixing ends (14a, 14b) of the contact spring (13) have fixing lugs (21a, 21b) which are spaced apart from one another and are guided into corresponding openings (22a, 22b) of the respective current path end (11a, 11b) to produce a snap connection.

6. Electric motor (1) according to one of claims 1 to 5,
**characterised in that**
the contact spring (13) consists of copper beryllium.

7. Electric motor (1) according to one of claims 1 to 6,
**characterised in that**
the contact spring (13) is provided with a galvanic barrier layer.

8. Electric motor (1) according to one of claims 1 to 7,
**characterised in that**
the contact spring (13) is coated with nickel.

9. Electric motor (1) according to claim 7 or 8,
**characterised in that**
the galvanically coated contact spring (13) is tin-plated.

## Revendications

1. Moteur électrique (1) pour entraîner un composant de véhicule automobile, comprenant un rotor (2) muni d'un collecteur (3) sur lequel appuie un balai (5) en établissant un contact, et comprenant une grille estampée (10) enrobée de matière plastique destinée à former un trajet de courant (9) intégré dans un isolant électrique (24) et relié au balai (5), le trajet de courant (9) acheminant le courant du moteur (I_{M}) étant interrompu en formant deux extrémités de trajet de courant (11a, 11b) à distance l'une de l'autre, et le point d'interruption (12) étant court-circuité par une lame de contact (13) faisant office de fusible thermique, **caractérisé en ce que**
- la lame de contact (13) se compose de deux branches de lame (13a, 13b) ayant chacune une extrémité de fixation (14a, 14b) et une extrémité de lame libre (15a, 15b), les extrémités de fixation (14a, 14b) des branches de lame (13a, 13b) étant reliées chacune à une extrémité de trajet de courant (11a, 11b) et les extrémités de lame libres (15a, 15b) étant en contact l'une avec l'autre sous précontrainte élastique par le biais d'une liaison brasée (16), et
- **en ce qu'**une ouverture de fenêtre (25) est prévue au niveau du point d'interruption (12) du trajet de courant (9) intégré dans l'isolant électrique (24), l'extrémité de lame libre (15a, 15b) précontrainte se détendant hors de ladite ouvertre en cas d'ouverture du contact de la lame de contact (13).

2. Moteur électrique (1) selon la revendication 1, **caractérisé en ce que** l'une des deux branches de lame (13a, 13b) de la lame de contact (13) présente au moins un point de flexion (17, 18) dont le creux de flexion (19, 20) est opposé à l'autre branche de lame (13a, 13b).

3. Moteur électrique (1) selon la revendication 1 ou 2, **caractérisé en ce que** la branche de lame (13a) présente deux points de flexion (17, 18) espacés entre eux et dont les creux de flexion (19, 20) sont opposés à l'autre branche de lame (13b).

4. Moteur électrique (1) selon la revendication 2 ou 3, **caractérisé en ce que** l'extrémité de lame libre (15b) de l'autre branche de lame (13b) est formée en creux pour réaliser la liaison brasée (16) avec l'extrémité de lame libre (15a) de la branche de lame (13a) cintrée sous précontrainte élastique.

5. Moteur électrique (1) selon l'une des revendications 1 à 4, **caractérisé en ce que** les extrémités de fixation (14a, 14b) de la lame de contact (13) sont munies de pattes de fixation (21a, 21b) espacées entre elles et qui sont guidées dans des ouvertures correspondantes (22a, 22b) de l'extrémité de trajet de courant (11a, 11b) respective de manière à produire une connexion par encliquetage.

6. Moteur électrique (1) selon l'une des revendications 1 à 5, **caractérisé en ce que** la lame de contact (13) est réalisée en cuivre-béryllium.

7. Moteur électrique (1) selon l'une des revendications 1 à 6, **caractérisé en ce que** la lame de contact (13) est munie d'une couche barrière galvanisée.

8. Moteur électrique (1) selon l'une des revendications 1 à 7, **caractérisé en ce que** la lame de contact (13) est revêtue de nickel.

9. Moteur électrique (1) selon l'une des revendications 7 ou 8, **caractérisé en ce que** la lame de contact (13) revêtue par galvanisation est étamée.
